# EUROPÄISCHE PATENTSCHRIFT

(11) **EP 2 347 149 B1**
(45) Veröffentlichungstag und Bekanntmachung des Hinweises auf die Patenterteilung: **01.05.2019**
(21) Anmeldenummer: 09744997.9
(22) Anmeldetag: 15.10.2009
(51) Int. Cl.: F16J 9/26, F16J 10/04, C23C 30/00

(54) **VERFAHREN ZUR BESCHICHTUNG EINES GLEITELEMENTS UND GLEITELEMENT, INSBESONDERE KOLBENRING ODER ZYLINDERLAUFBUCHSE EINES VERBRENNUNGSMOTORS**
METHOD FOR COATING A SLIDING ELEMENT AND SLIDING ELEMENT, IN PARTICULAR A PISTON RING OR CYLINDER LINER OF AN INTERNAL COMBUSTION ENGINE
PROCÉDÉ POUR REVÊTIR UN ÉLÉMENT DE GLISSEMENT, ET ÉLÉMENT DE GLISSEMENT, EN PARTICULIER SEGMENT DE PISTON OU CHEMISE DE CYLINDRE D'UN MOTEUR À COMBUSTION INTERNE

(30) Priorität: 16.10.2008 DE 102008042896
(43) Veröffentlichungstag der Anmeldung: 27.07.2011
(73) Patentinhaber: Federal-Mogul Burscheid GmbH, 51399 Burscheid (DE)
(72) Erfinder: HOPPE, Steffen, 51491 Overath (DE); FISCHER, Manfred, 42799 Leichlingen (DE); KENNEDY, Marcus, 40479 Düsseldorf (DE)
(74) Vertreter: Hoffmann Eitle
(86) Internationale Anmeldenummer: PCT/EP2009/063472
(87) Internationale Veröffentlichungsnummer: WO 2010/043669

(56) Entgegenhaltungen:
- WO-A1-2006/125683
- VOEVODIN A A ET AL: "Recent Advances in Hard, Tough, and Low Friction Nanocomposite Coatings" TSINGHUA SCIENCE AND TECHNOLOGY, TSINGHUA UNIVERSITY PRESS, BEIJING, CN, Bd. 10, Nr. 6, 1. Dezember 2005 (2005-12-01), Seiten 665-679, XP022932940 ISSN: 1007-0214 [gefunden am 2005-12-01]
- CHANG Y-Y ET AL: "Characterization of nitrogen-doped a-C:H films deposited by cathodic-arc activated deposition process" DIAMOND AND RELATED MATERIALS, ELSEVIER SCIENCE PUBLISHERS, AMSTERDAM, NL, Bd. 12, Nr. 10-11, 1. Oktober 2003 (2003-10-01), Seiten 2077-2082, XP004479912 ISSN: 0925-9635
- PAL S K ET AL: "Effects of N-doping on the microstructure, mechanical and tribological behavior of Cr-DLC films" SURFACE AND COATINGS TECHNOLOGY, ELSEVIER, AMSTERDAM, NL, Bd. 201, Nr. 18, 25. Juni 2007 (2007-06-25), Seiten 7917-7923, XP025317810 ISSN: 0257-8972 [gefunden am 2007-05-25]
- VOEVODIN A A ET AL: "Tribological performance and tribochemistry of nanocrystalline WC/amorphous diamond-like carbon composites" THIN SOLID FILMS, ELSEVIER-SEQUOIA S.A. LAUSANNE, CH, Bd. 342, Nr. 1-2, 26. März 1999 (1999-03-26), Seiten 194-200, XP004168094 ISSN: 0040-6090
- VOEVODIN A A ET AL: "Nanocrystalline WC and WC/a-C composite coatings produced from intersected plasma fluxes at low deposition temperatures" JOURNAL OF VACUUM SCIENCE AND TECHNOLOGY: PART A, AVS /AIP, MELVILLE, NY., US, Bd. 17, Nr. 3, 1. Mai 1999 (1999-05-01), Seiten 986-992, XP012004493 ISSN: 0734-2101
- RINCÓN C. ET AL: "Tungsten Carbide / Diamond-like Carbon Multilyer Coatings on Steel for Tribological Applications" SURFACE AND COATINGS TECHNOLOGY, Bd. 148, 2001, Seiten 277-283, XP002565889
- VOEVODIN A A ET AL: "Nanocrystalline carbide/amorphous carbon composites" JOURNAL OF APPLIED PHYSICS, AMERICAN INSTITUTE OF PHYSICS. NEW YORK, US, Bd. 82, Nr. 2, 15. Juli 1997 (1997-07-15), Seite 855, XP012043112 ISSN: 0021-8979

## Beschreibung

### Technisches Gebiet

Die Erfindung betrifft ein Verfahren zur Beschichtung eines Kolbenringes oder einer Zylinderlaufbuchse eines Verbrennungsmotors, sowie ein Kolbenring oder eine Zylinderlaufbuchse.

Kolbenringe werden in Verbrennungsmotoren eingesetzt, um zwischen dem sich auf und ab bewegenden Kolben und der Zylinderwand eine möglichst perfekte Abdichtung zu schaffen. Ferner dienen Kolbenringe dazu, das an der Zylinderwand befindliche Öl abzustreifen und die Nutzbarkeit dieses Öls für die Schmierung zu erhalten. Die wesentlichen Anforderungen an Kolbenringe bestehen in einer möglichst geringen Reibung sowie einer möglichst langen Lebensdauer unter den teilweise extremen Anforderungen beim Betrieb eines Verbrennungsmotors. Dies impliziert ein Verschleißverhalten, bei dem der Kolbenring seinen Anforderungen möglichst lange gerecht wird. Dies gilt in gleicher Weise für das Verschleißverhalten von Zylinderlaufbuchsen, mit denen sich die Kolbenringe in Gleitkontakt befinden.

### Stand der Technik

Die WO 2007/020139 A1 beschreibt ein Substrat, bei dem es sich um einen Kolbenring handeln kann, mit einer Haftschicht, einer Zwischenschicht aus tetraedischem Kohlenstoff, und einer äußeren Schicht aus amorphem Kohlenstoff.

Aus der DE 10 2005 063 123 B3 der Anmelderin geht ein Gleitelement, beispielsweise ein Kolbenring hervor, der eine Verschleißschicht und eine Einlaufschicht aufweist.

### Darstellung der Erfindung

Der Erfindung liegt die Aufgabe zugrunde, ein Verfahren zur Beschichtung eines Kolbenringes oder einer Zylinderlaufbuchse eines Verbrennungsmotors zu schaffen, durch das die Anforderungen im Hinblick auf die Reibungswerte und die Lebensdauer gleichermaßen berücksichtigt werden. Ferner soll ein Gleitelement geschaffen werden, bei dem die Reibungswerte und eine lange Lebensdauer in günstiger Weise kombiniert sind. Die Lösung dieser Aufgabe erfolgt zum einen durch das in Anspruch 1 beschriebene Verfahren.

Demzufolge wird ein Kolbenring oder eine Zylinderlaufbuchse durch Abscheidung einer Hartstoffschicht beschichtet. Erfindungsgemäß werden während, mit anderen Worten parallel zu dieser Abscheidung DLC-Phasen in die Hartstoffschicht eingelagert. Das erfindungsgemäße Verfahren unterscheidet sich somit von bislang bekannten Verfahren, indem die DLC-Beschichtung nicht "auf" der Hartstoffschicht und/oder in einem separaten Beschichtungsprozess erfolgt, sondern parallel und bevorzugt gleichzeitig mit der Abscheidung der Hartstoffschicht, so dass die beschriebenen Einlagerungen ausgebildet werden. Die Einlagerung der DLC-Phasen kann auch als "in-situ-Einbau" bezeichnet werden. Bei Versuchen konnte festgestellt werden, dass durch das parallele Vorliegen der Hartstoffphasen einerseits und der DLC-Phasen andererseits ein günstiges Reibungsverhalten erzielt wird. Ferner konnte ein günstiges Verschleißverhalten festgestellt werden. Mit anderen Worten befindet sich der Verschleiß in einem Bereich, der eine den Anforderungen entsprechende Lebensdauer sicherstellt. Die Einlagerung der DLC-Phasen bietet darüber hinaus die Möglichkeit, die Hartstoffschicht in vorteilhafter Weise entlang ihrer Dicke mit unterschiedlichen Eigenschaften zu versehen. So kann beispielsweise das Verschleißverhalten an der Oberfläche und/oder den obersten Schichten der Hartstoffschicht derart eingestellt werden, dass ein günstiges Einlaufverhalten erreicht wird, während tiefer liegende Bereiche der Hartstoffschicht durch geeignete Einlagerung der DLC-Phasen so ausgebildet werden, dass ein dauerhaft günstiges Verschleißverhalten erreicht wird.

Als besonders günstig hat sich erwiesen, den Phasenanteil der DLC-Phase an der Oberfläche verglichen mit der restlichen Beschichtung zu erhöhen. Dies verbessert in vorteilhafter Weise das Einlaufverhalten.

Bevorzugte Weiterbildungen des erfindungsgemäßen Verfahrens sind in den weiteren Ansprüchen beschrieben.

Für die Hartstoffbeschichtung wird eine Dicke von mindestens 10 µm bevorzugt. Hierdurch können die DLC-Einlagerungen in dem für die Eigenschaften günstigen Umfang vorgesehen werden. Gleichzeitig weist eine Schicht mit der genannten Dicke die Möglichkeit auf, weitere Schichten mit speziellen Eigenschaften in tieferen Lagen vorzusehen.

Für die Hartstoffbeschichtung wird ferner bevorzugt, dass sie Nitride von Elementen der 4. und/oder 5. und/oder 6. Nebengruppe des Periodensystems enthält, oder sogar vollständig aus diesen besteht. Mit den genannten Elementen konnten besonders günstige Eigenschaften festgestellt werden. Besonders bevorzugt wird eine Hartstoffbeschichtung aus Chromnitrid (CrN).

Dies gilt in ähnlicher Weise im Hinblick auf die thermische Beständigkeit und/oder Brandspurbeständigkeit, die bei der erfindungsgemäßen Hartstoffbeschichtung dadurch verbessert werden kann, dass diese weitere Elemente, wie z.B. Bor, Kohlenstoff, Sauerstoff und/oder Silizium aufweist.

Insbesondere kann im Verhältnis zu der Hartstoffphase ein Phasenanteil von 0,1 bis 99,9 % vorliegen.

Alternativ und/oder bereichsweise ergänzend können die DLC-Einlagerungen örtlich lokalisiert sein, so dass sie einen lokalen Phasenanteil von 100 % aufweisen und insbesondere eine Schicht aus 100 % DLC-Einlagerungen ausmachen können. In Abhängigkeit von den Anforderungen konnten für beide oben genannten Ausführungsformen gute Eigenschaften festgestellt werden.

Wie erwähnt, kann der Phasenanteil der DLC-Phasen über die Schichtdicke der Hartstoffschicht, bevorzugt über einen oder mehrere Gradienten variiert werden. Hierdurch können die Eigenschaften der Beschichtung insgesamt entlang der Dicke variiert und besonders gut an die jeweils gestellten Anforderungen angepasst werden.

Die Lösung der oben genannten Aufgabe erfolgt ferner durch das im Anspruch 8 beschriebene Gleitelement. Die bevorzugten Ausführungsformen und die dadurch erreichbaren Vorteile entsprechen denjenigen, die vorangehend unter Bezugnahme auf das erfindungsgemäße Verfahren beschrieben wurden.

## Patentansprüche

1. Verfahren zur Beschichtung eines Kolbenringes oder einer Zylinderlaufbuchse eines Verbrennungsmotors, bei dem während der Abscheidung einer Hartstoffschicht DLC-Phasen in die Hartstoffschicht eingelagert werden, wobei der Phasenanteil der DLC-Phasen an der Oberfläche gegenüber der restlichen Schicht erhöht wird, und wobei auf der Hartstoffschicht keine DLC-Beschichtung erfolgt.

2. Verfahren nach Anspruch 1,
**dadurch gekennzeichnet, dass** die Hartstoffschicht mit einer Dicke von ≥ 10 um abgeschieden wird.

3. Verfahren nach Anspruch 1 oder 2,
**dadurch gekennzeichnet, dass** die Hartstoffschicht Nitride von Elementen der 4. und/oder 5. und/oder 6. Nebengruppe des Periodensystems enthält.

4. Verfahren nach einem der vorangehenden Ansprüche,
**dadurch gekennzeichnet, dass** die Hartstoffschicht ferner zusätzliche Elemente, wie z.B. Bor, Kohlenstoff, Sauerstoff und/oder Silizium, enthält.

5. Verfahren nach einem der vorangehenden Ansprüche,
**dadurch gekennzeichnet, dass** die DLC-Phasen einen Phasenanteil von 0,1 bis 99,9 % aufweisen.

6. Verfahren nach einem der Ansprüche 1 bis 4,
**dadurch gekennzeichnet, dass** die DLC-Phasen einen lokalen Phasenanteil von bis zu 100 % aufweisen.

7. Verfahren nach einem der Ansprüche 1 bis 6,
**dadurch gekennzeichnet, dass** der Phasenanteil der DLC-Phasen über die Schichtdicke variiert wird.

8. Kolbenring oder Zylinderlaufbuchse eines Verbrennungsmotors, mit einer Hartstoffschicht, die eingelagerte DLC-Phasen aufweist, wobei der Phasenanteil der DLC-Phasen an der Oberfläche gegenüber der restlichen Schicht erhöht ist, und wobei auf der Hartstoffschicht keine DLC-Beschichtung ausgebildet ist.

9. Kolbenring oder Zylinderlaufbuchse eines Verbrennungsmotors nach Anspruch 8,
**dadurch gekennzeichnet, dass** die Hartstoffschicht eine Dicke von ≥ 10 um aufweist.

10. Kolbenring oder Zylinderlaufbuchse eines Verbrennungsmotors nach Anspruch 8 oder 9,
**dadurch gekennzeichnet, dass** die Hartstoffschicht Nitride von Elementen der 4. und/oder 5. und/oder 6. Nebengruppe des Periodensystems enthält.

11. Kolbenring oder Zylinderlaufbuchse eines Verbrennungsmotors nach einem der Ansprüche 8 bis 10,
**dadurch gekennzeichnet, dass** die Hartstoffschicht ferner zusätzliche Elemente, wie z.B. Bor, Kohlenstoff, Sauerstoff und/oder Silizium, enthält.

12. Kolbenring oder Zylinderlaufbuchse eines Verbrennungsmotors nach einem der Ansprüche 8 bis 11,
**dadurch gekennzeichnet, dass** die DLC-Phasen einen Phasenanteil von 0,1 bis 99,9 % aufweisen.

13. Kolbenring oder Zylinderlaufbuchse eines Verbrennungsmotors nach einem der Ansprüche 8 bis 12,
**dadurch gekennzeichnet, dass** die DLC-Phasen einen lokalen Phasenanteil von bis zu 100 % aufweisen.

14. Kolbenring oder Zylinderlaufbuchse eines Verbrennungsmotors nach einem der Ansprüche 8 bis 10, 12 und 13,
**dadurch gekennzeichnet, dass** der Phasenanteil der DLC-Phasen über die Schichtdicke variiert.

## Claims

1. Method of coating a piston ring or cylinder liner of an internal combustion engine in which DLC phases are embedded in a hard carbide, nitride or oxide layer during the deposition of said hard layer, the proportion of the DLC phases being increased at the surface in comparison with the rest of the layer and no coating with DLC taking place onto the hard layer.

2. Method according to claim 1, **characterised in that** the hard carbide, nitride or oxide layer is deposited in a thickness of ≥ 10 µm.

3. Method according to claim 1 or 2, **characterised in that** the hard carbide, nitride or oxide layer contains nitrides of elements in group 4 and/or 5 and/or 6 of the periodic table.

4. Method according to one of the preceding claims, **characterised in that** the hard carbide, nitride or oxide layer also contains additional elements such for example as boron, carbon, oxygen and/or silicon.

5. Method according to one of the preceding claims, **characterised in that** the DLC phases are present in a proportion of from 0.1 to 99.9%.

6. Method according to one of claims 1 to 4, **characterised in that** the DLC phases are present in a local proportion of up to 100%.

7. Method according to one of claims 1 to 6, **characterised in that** the proportion of the DLC phases is varied over the thickness of the layer.

8. Piston ring or cylinder liner of an internal combustion engine, having a hard carbide, nitride or oxide layer which has embedded DLC phases, the proportion of the DLC phases being increased at the surface in comparison with the rest of the layer, and no DLC coating being formed on the hard carbide, nitride or oxide layer.

9. Piston ring or cylinder liner of an internal combustion engine according to claim 8, **characterised in that** the hard carbide, nitride or oxide layer is of a thickness of ≥ 10 µm.

10. Piston ring or cylinder liner of an internal combustion engine according to claim 8 or 9, **characterised in that** the hard carbide, nitride or oxide layer contains nitrides of elements in group 4 and/or 5 and/or 6 of the periodic table.

11. Piston ring or cylinder liner of an internal combustion engine according to one of claims 8 to 10, **characterised in that** the hard carbide, nitride or oxide layer also contains additional elements such for example as boron, carbon, oxygen and/or silicon.

12. Piston ring or cylinder liner of an internal combustion engine according to one of claims 8 to 11, **characterised in that** the DLC phases are present in a proportion of from 0.1 to 99.9%.

13. Piston ring or cylinder liner of an internal combustion engine according to one of claims 8 to 12, **characterised in that** the DLC phases are present in a local proportion of up to 100%.

14. Piston ring or cylinder liner of an internal combustion engine according to one of claims 8 to 10, 12 and 13, **characterised in that** the proportion of the DLC phases varies over the thickness of the layer.

## Revendications

1. Procédé de revêtement d'un segment de piston ou d'une chemise de cylindre d'un moteur à combustion interne, pour lequel pendant le dépôt d'une couche de matière dure, des phases DLC sont intercalées dans la couche de matière dure, dans lequel la part de phase des phases DLC est augmentée sur la surface par rapport à la couche restante, et dans lequel aucun revêtement DLC n'est effectué sur la couche de matière dure.

2. Procédé selon la revendication 1,
**caractérisé en ce que**
la couche de matière dure est déposée avec une épaisseur de ≥ 10 µm.

3. Procédé selon la revendication 1 ou 2,
**caractérisé en ce que**
la couche de matière dure contient des nitrures d'éléments du 4^{e} et/ou 5^{e} et/ou 6^{e} sous-groupe du système périodique.

4. Procédé selon l'une quelconque des revendications précédentes,
**caractérisé en ce que**
la couche de matière dure contient de plus des éléments supplémentaires, tels que du bore, du carbone, de l'oxygène et/ou du silicium.

5. Procédé selon l'une quelconque des revendications précédentes,
**caractérisé en ce que**
les phases DLC présentent une part de phase de 0,1 à 99,9 %.

6. Procédé selon l'une quelconque des revendications 1 à 4,
**caractérisé en ce que**
les phases DLC présentent une part de phase locale jusqu'à 100 %.

7. Procédé selon l'une quelconque des revendications 1 à 6,
**caractérisé en ce que**
la part de phase des phases DLC est variée sur l'épaisseur de couche.

8. Segment de piston ou chemise de cylindre d'un moteur à combustion interne, avec une couche de matière dure, qui présente des phases DLC intercalées, dans lequel la part de phase des phases DLC est augmentée sur la surface par rapport à la couche restante, et dans lequel aucun revêtement DLC n'est réalisé sur la couche de matière dure.

9. Segment de piston ou chemise de cylindre d'un moteur à combustion interne selon la revendication 8,
**caractérisé en ce que**
la couche de matière dure présente une épaisseur de ≥ 10 µm.

10. Segment de piston ou chemise de cylindre d'un moteur à combustion interne selon la revendication 8 ou 9,
**caractérisé en ce que**
la couche de matière dure contient des nitrures d'éléments du 4^{e} et/ou 5^{e} et/ou 6^{e} sous-groupe du système périodique.

11. Segment de piston ou chemise de cylindre d'un moteur à combustion interne selon l'une quelconque des revendications 8 à 10,
**caractérisé en ce que**
la couche de matière dure contient de plus des éléments supplémentaires, tels que du bore, du carbone, de l'oxygène et/ou du silicium.

12. Segment de piston ou chemise de cylindre d'un moteur à combustion interne selon l'une quelconque des revendications 8 à 11,
**caractérisé en ce que**
les phases DLC présentent une part de phase de 0,1 à 99,9 %.

13. Segment de piston ou chemise de cylindre d'un moteur à combustion interne selon l'une quelconque des revendications 8 à 12,
**caractérisé en ce que**
les phases DLC présentent une part de phase locale jusqu'à 100 %.

14. Segment de piston ou chemise de cylindre d'un moteur à combustion interne selon l'une quelconque des revendications 8 à 10, 12 et 13,
**caractérisé en ce que**
la part de phase des phases DLC varie sur l'épaisseur de couche.
